# EUROPEAN PATENT SPECIFICATION

(11) **EP 0 709 994 B1**
(45) Date of publication and mention of the grant of the patent: **09.01.2002**
(21) Application number: 95306980.4
(22) Date of filing: 02.10.1995
(51) Int. Cl.: H04L 29/06, G06F 13/00

(54) **Communications management between client and server processes**
Kommunikationsmanagement zwischen Klient- und Server-Prozessen
Gestion de communication entre processus de client et serveur

(30) Priority: 03.10.1994 US 317980
(43) Date of publication of application: 01.05.1996
(73) Proprietor: International Business Machines Corporation, Armonk, N.Y. 10504 (US)
(72) Inventor: Kapoor, Sandhya, Austin, Texas 78759 (US); Alvis, Grant Matthew, Austin, Texas 78727-6735 (US)
(74) Representative: Davies, Simon Robert

(56) References cited:
- EP-A- 0 600 235
- WO-A-94/06083
- WO-A-94/11810
- US-A- 5 249 293

## Description

The present invention relates generally to network communications and more particularly to a method for efficiently managing remote procedure calls between client and server processes in a computer network when these processes are supported on the same host computer.

It is well known in the art to interconnect multiple computers into a local area network (LAN) to enable such computers to exchange information and share resources. A local area network provides a distributed computing environment in which users can access distributed resources and process applications on multiple computers. Network communications are carried out using so-called communication protocols. By convention, communication architectures in a local area network are typically characterized as conforming to a seven layer model in the following hierarchy: physical layer, logical link layer, network layer, transport layer, session layer, presentation layer and application layer. The physical layer comprises the actual physical devices and medium used to transmit information. The logical link layer frames data packets and controls physical layer data flow, insuring delivery of data regardless of the actual physical medium. The network layer addresses and routes data packets. It creates and maintains a route in the network between a source node and a destination node. The transport layer creates a transport pipeline between nodes and manages the network layer connections. The session layer typically provides remote procedure call (RPC) support, maintains the integrity of the connection between nodes and controls data exchange. The presentation layer encodes and decodes data and provides transparency between nodes. Finally, the application layer provides the interface to end-user processes and provides standardized services to applications.

The seven layer model has many variations depending on the particular network architecture. Thus, for example, in a network architecture based on the TCP/IP (Transmission Control Protocol/Internet Protocol) interface running IBM RISC System/6000 computer workstations under the AIX Operating System, there is another layer, called the socket layer, that sits between the session and transport layers. The socket layer creates so-called "sockets" which are logical constructs analogous to physical ports. In this architecture, the RPC mechanism is not just supported in the session layer, but also includes functionality of the session layer. A known RPC mechanism useful in distributed computing environments (DCE) includes software code provided by the Open Systems Foundation (OSF).

The OSF DCE RPC mechanism is used conventionally to manage communication between a "client" and a "server" in a distributed computing environment, with the client requesting a service from a server using a remote procedure call (RPC). As is well known, a "client" refers to a network participant that is requesting a service accessible somewhere within the computing environment. A "server" provides the requested service to a client. with the OSF DCE RPC mechanism, each client process (namely, a process running on a client machine) has an associated socket created by the socket layer. Each server process likewise is associated with a socket. In response to an RPC, a call directory service returns a data structure, called a "binding handle," specifying the location of the server process as a network address and the port number where the server process is running. The binding handle is then used by the RPC mechanism to define a communication path between the client process and the server process. The path is defined using ip-based (i.e., network layer) protocol sequences of the Internet Network Address Family (AF_INET) to open the sockets. The path loops down from the client process through the transport and network layers, out on the network and then back up the layers associated with the host on which the server process is running. Such a mechanism is known from EP-A-0 600 235.

The OSF DCE RPC mechanism as described above cannot distinguish whether client and server processes are running on the same host machine. In all cases, the mechanism returns a binding handle to the client process including an AF_INET protocol sequence that sets up a communication path through the transport (TCP or UDP) layer and the network (IP) layer. Communications through TCP use connection-oriented protocol sequences while those through UDP use connection-less protocol sequences, but in either case, when the client and server processes reside on the same host, an RPC generates a so-called loopback message because once the network (IP) layer receives the destination network address, it recognizes that the RPC is "local"; the path must therefore be looped back up through the transport layer to the server process on the application layer. Because of this loopback requirement, RPC's between client and server processes on the same machine are not optimized from a performance standpoint as they use the transport and network layers unnecessarily.

Accordingly the invention provides a method for managing communication between a client process and a server process in a distributed computing environment, the client process residing on a host computer that is connected to a physical network having a transport layer and a network layer, comprising the steps of:
(a) when a remote procedure call is made by the client process, detecting whether a server process identified by the remote procedure call is located on the host computer;
(b) if the server process is located on the host computer, establishing an interprocess communication path between the client process and the server process without use of the transport and network layers of the physical network; and
(c) executing the remote procedure call.

Thus the present invention typically finds application in managing communications between client and server processes in a local area network providing a distributing computing environment in which users can access distributed resources and process applications on multiple computers.

In a preferred embodiment, the interprocess communication path is established by the client process passing to the server process a binding handle including an endpoint, the endpoint including a full pathname to a socket file which is a unique universal identifier object. Preferably the remote procedure call is executed using a send and receive messaging facility of an operating system of the host computer.

It is also preferred that the client process returns a vector of data structures at least one of which includes a protocol sequence to establish the interprocess communication path between the client process and the server process. Typically the vector of data structures includes a set of data structures, each of which establishes an interprocess communication path between the client process and the server process without use of the transport and network layers, with at least one data structure having a protocol sequence that establishes a communication path between the client process and server process through use of the transport and network layers. The client process is then forced to use protocol sequences from the set of data structures before using the protocol sequence that establishes the communication path through use of the transport and network layers.

It is also preferred that said establishing step includes returning to the client process a vector of binding handles including a first set and a second set, each of the first set of binding handles including a protocol sequence to establish an interprocess communication path between the client process and the server process without use of the transport and network layers, each of the second set of binding handles including a protocol sequence to establish a communication path between the client process and the server process through use of the transport and network layers; and the method further comprises the steps of:
attempting to execute the remote procedure call using one of the binding handles in the first set until all of the binding handles in the first set have been used; and
if all of the binding handles in the first set have been used and an interprocess communication path has not been established, using one of the binding handles in the second set to attempt to execute the remote procedure call.

In a preferred embodiment, the host computer supports a UNIX-based operating system; and said establishing step includes returning to the client process a binding handle having a protocol sequence "ncacn_unix_stream" to establish the interprocess communication path between the client process and the server process, wherein the protocol sequence "ncacn" is a connection-oriented RPC protocol, "unix" identifies a UNIX Network Address Family (AF_UNIX) communication domain and "stream" identifies a UNIX domain socket.

The invention also provides a computer system providing a distributed computing environment in which users can access distributed resources and process applications, the computer system including a host computer connected to a local area network having a transport layer and a network layer, comprising:
means responsive to a remote procedure call (RPC) from a client process for detecting whether a server process identified by the RPC is located on the host computer; and
means responsive to the detecting means for using an interprocess communication mechanism of the host computer to facilitate the RPC.

The invention further provides a computer system for managing communication between a client process and a server process in a distributed computing environment, the client process residing on a host computer that is connected to a physical network having a transport layer and a network layer, said system comprising:
(a) means responsive to a remote procedure call being made by the client process, for detecting whether a server process identified by the remote procedure call is located on the host computer;
(b) means responsive to the server process being located on the host computer, for establishing an interprocess communication path between the client process and the server process without use of the transport and network layers of the physical network; and
(c) means for executing the remote procedure call.

Thus remote procedure calls (RPC's) between client and server processes running on the same host computer in a network may be efficiently managed by enabling a network RPC mechanism to distinguish whether client and server processes are running on the same host machine and, if so, to bypass the network and transport layers using an alternate protocol sequence that exploits local interprocess communication (IPC) facilities. The RPC mechanism recognizes when client and server DCE processes exist on the same host to thereby enable use of the local IPC mechanism, instead of a network layer (IP) path, to implement an RPC. Bypassing the IP layer provides significant performance gains. The IPC mechanism gives effect to a "local" RPC, which is an RPC made between two processes that are running on the same host machine. In one particular embodiment, the IPC mechanism is UNIX Domain sockets, with a connection-oriented protocol sequence being used to open such sockets based on the UNIX Network Address Family (AF_UNIX). With AF_UNIX, the operating system kernel handles the task of bridging communications between the two processes on the same host.

A novel protocol sequence may be employed as a data structure useful for improving local RPC performance. The data structure preferably includes a unique identifier so that a unique socket file is used for each association established between a client and server process. This ensures that a socket file will not be used again on multiple invocations of a DCE application.

It is important that such a protocol sequence as described above does not cause any compatibility or interoperability problems with existing DCE applications. Therefore, applications using previous versions of the DCE shared library may be allowed to communicate with applications using a DCE shared library supporting the protocol sequence. Implementation of communications management in accordance with the invention may therefore be substantially invisible to the user and backwards compatible with existing client/server applications.

Thus a method is provided for managing communications between a client process and a server process in a distributed computing environment, with the client process residing on a host computer that is connected to a physical network having a transport layer and a network layer. The method begins when a client process makes a remote procedure call (RPC) by detecting whether a server process identified by the remote procedure call is located on the host computer. If so, typically a binding handle vector is returned to the client process including at least one binding handle having a protocol sequence that establishes an interprocess communication path between the client and server processes instead of a path through the transport and network layers of the physical network. The remote procedure call is then executed, preferably by using a send and receive messaging facility of the host computer operating system.

Various preferences may be established to ensure that local RPC's use the novel protocol sequence if at all possible. Thus the binding handle vector may be returned to the client process with handles having the new protocol sequence. If the binding handle vector is also returned with ip-based protocol sequences, the binding handles with the new protocol sequence are used before any binding handle with an ip-based protocol sequence.

An embodiment of the invention will now be described in detail by way of example only with reference to the following drawings:
FIGURE 1 schematically illustrates a computer network;
FIGURE 2A illustrates a conventional RPC using the network and transport layers of the physical network;
FIGURE 2B illustrates a "local" RPC carried out using an IPC mechanism of the host computer in accordance with the present invention;
and FIGURE 3 illustrates a preferred method for managing local remote procedure calls using preferences to bias the RPC mechanism to select AF_UNIX protocol sequences over ip-based protocol sequences.

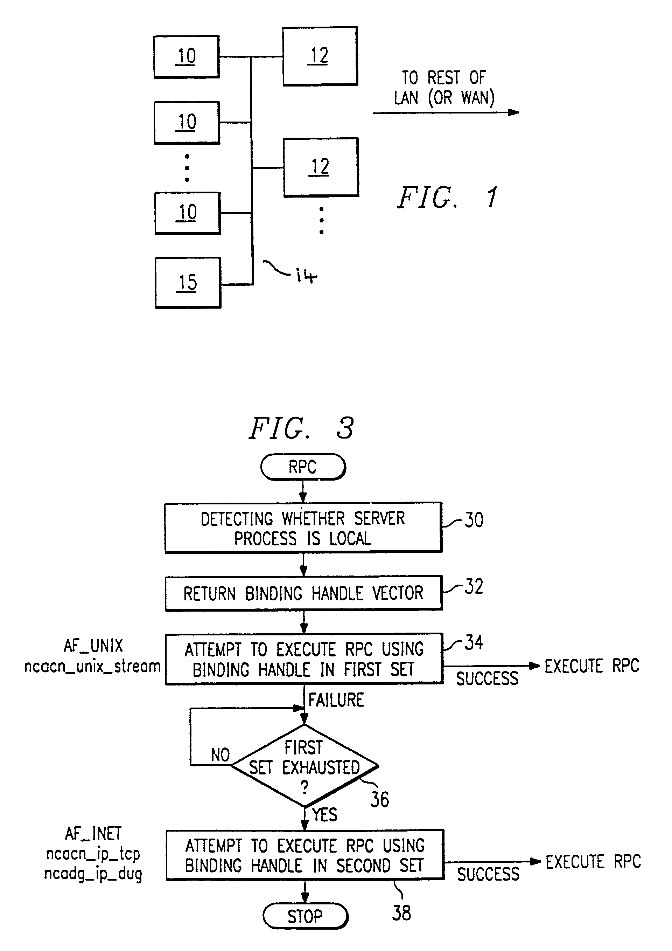

A known distributed computing environment (DCE) is illustrated in FIGURE 1 and includes clients 10 interconnected to servers 12 via a network 14. Each of the clients 10 and servers 12 is a computer. For example, each computer may be an IBM RISC System/6000 workstation running the AIX operating system. The AIX operating system is compatible at the application interface level with AT&T's UNIX operating system, version 5.2. The various models of the RISC-based personal computers are described in many publications of the IBM Corporation, for example, RISC System/6000, 7073 and 7016 POWERstation and POWERserver Hardware Technical Reference, Order No. SA23-2644-00. The AIX operating system is described in AIX Operating System Technical Reference, published by IBM Corporation, First Edition (November, 1985), and other publications. A detailed description of the design of the UNIX operating system is found in a book by Maurice J. Bach, Design of the Unix Operating System, published by Prentice-Hall (1986).

In one particular implementation, a plurality of IBM RISC System/6000 are interconnected by IBM's System Network Architecture (SNA), and more specifically SNA LU 6.2 Advanced Program to Program Communication (APPC). SNA uses as its link level Ethernet, a local area network (LAN) developed by Xerox Corporation, or SDLC (Synchronous Data Link Control). A simplified description of local area networks may be found in a book by Larry E. Jordan and Bruce Churchill entitled Communications and Networking for the IBM PC, published by Robert J. Brady (a Prentice-Hall Company)(1983).

A different implementation uses IBM's PS/2 line of computers running under the OS/2 operating system. For more information on the PS/2 line of computers and the OS/2 operating system, the reader is directed to Technical Reference Manual Personal Systems/2 Model 50, 60 Systems IBM Corporation, Part No. 68x2224 Order Number S68X-2224 and OS/2 2.0 Technical Library, Proaramming Guide Volumes 1-3 version 2.00, Order Nos. 10G6261, 10G6495 and 10G6494.

It will be appreciated that the teachings herein may be implemented using a wide variety of different computers and computer networks.

Returning now back to FIGURE 1, each of the clients 10 and servers 12 may operate as a client or server, depending on whether it is requesting or supplying services. Typically, the client includes at least one process that requests a service from a server process using a remote procedure call (RPC). Numerous DCE applications, however, are written in such a manner that both "client" and "server" precesses run on the same host computer. This is illustrated in FIGURE 1 by the client/server 15. An RPC from a client process intended for a server process on the client/server 15 is said to be "local" or a "local RPC" for purposes of the following discussion.

In the OSF DCE RPC mechanism of the prior art, all RPC's, whether local or not, were carried out using network-based (i.e., "ip-based") protocol sequences: "ncacn_ip_tcp" or "ncadg_ip_udp", where "ncacn" refers to a connection-oriented OSF DCE RPC protocol and "ncadg" refers to a connection-less OSF DCE RPC protocol. When using these protocols, the Internet Address Family (AF_INET) communication domain is used, as evidenced by the "ip" nomenclature. The final component of each sequence refers to the socket type, thus for example "udp" refers to a datagram. In response to an RPC, a call directory service daemon (CDSD) returns a so-called "binding handle" specifying the location of the server process as a network address and the port number where the server process is running. The binding handle also identifies the server process required by the RPC. The binding handle is then used by the RPC mechanism to define a communication path between the client process and the server process. The path is defined using the ip-based (i.e., network layer) protocol sequences of AF_INET to open the sockets. The path loops down from the client process through the transport and network layers, out on the network and then back up the layers associated with the host on which the server process is running.

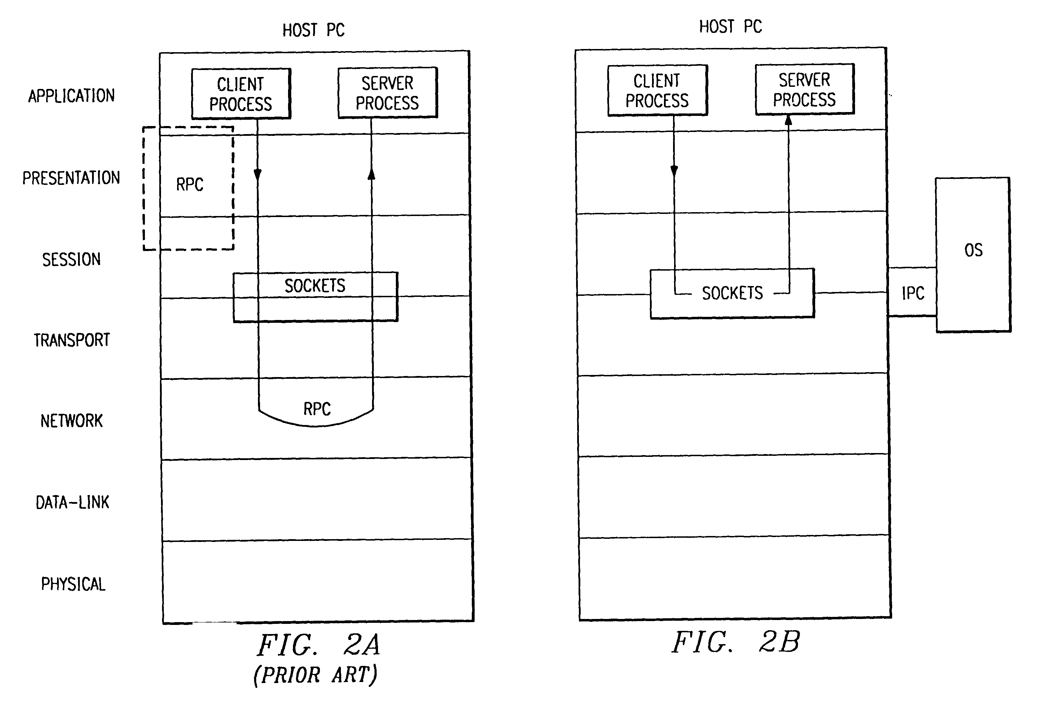

Thus, even if the client and server processes are on the same host machine, the transport (TCP or UDP) and network (IP) layers are used to send a loopback message. This is illustrated in FIGURE 2A.

By contrast, instead of using the ip-based protocol sequences, a new protocol sequence "ncacn_unix_stream" is returned to a client process making a local RPC, as illustrated schematically in FIGURE 2B. This protocol sequence avoids the transport and network layers by using the Unix Network Address Family (AF_UNIX) communication domain. With AF UNIX, the operating system kernel handles the tasks of bridging communications between two processes on the same host. Although AF_UNIX is the preferred technique for implementing the interprocess communication (IPC) between the client and server processes, other OS IPC mechanisms (such as shared memory or message queues) could be used as well. In any case, use of local IPC mechanisms is significantly faster than doing a loopback call through the transport and network layers, so a performance improvement is realized.

The ncacn_unix_stream protocol sequence is only for use by RPC's being made between DCE application processes that reside on the same host machine. The RPC runtime will not return an ncacn_unix_stream binding to a client application if the server is not on the same host. Because the ncacn_unix_stream protocol sequence is for use with DCE applications on the same host machine, these bindings do not contain a network address. Also, the endpoint for a ncacn_unix_stream binding handle is represented as a full pathname to a UNIX socket file. A unique socket file is used for each association established between a client and server process. By default, these socket files are opened in a directory /var/dce/rpc/socket. Also, by default, the name for each socket file is an object UUID (or universal unique identifier), which insures the uniqueness of each filename. The UUID's are essentially long random numbers created by a UUID generator routine. When allowing the RPC runtime to assign an endpoint to an ncacn_unix_stream binding, the binding will be an object UUID, which is thus guaranteed to be unique. This means there is no chance that a socket file will be used again on two invocations of a DCE application.

In a UNIX-based operating system, the OS kernel requires the user to open a file before the kernel does any work for the user. The socket files created are zero length files that serve as placeholders for the OS kernel. Each unique socket file occupies an inode entry in the file system in which it was created. The OS kernel carries out the RPC by using the socket file as a placeholder in the file system and then controlling its own data structures to send and receive data between the client and server processes to effect the RPC. Thus, for example, the OS kernel may use "Mbuf" data structures for this purpose.

The following represent several useful examples of ncacn_unix stream string bindings:
ncacn_unix_stream:[]
ncacn_unix_stream:[/var/dce/rpc/socket/0063980e-357b-le07-878b-10005a4f3bce]
The protocol sequence thus includes a reform to the connection-oriented "ncacn" RPC protocol, the AF_UNIX communication domain (identified by the "unix" component) and "stream" type sockets. In the first example, the endpoint (i.e., the data inside the brackets [ ]) is empty. In the second example, the endpoint identifies the default socket directory "/var/dce/rpc/socket/" and a UUID.

The endpoint thus does not have to be an object UUID in the /var/dce/rpc/socket directory. The "endpoint" attribute in an IDL (Interface Definition Language) specification file can be used to specify the pathname to a unique file. Or an application could take an ncacn unix_stream string binding as a command line argument, and convert it to a binding handle using a rpc_binding_from_string_binding () routine. Examples of user-specified socket file paths are:
ncacn_unix_stream:[/var/dce/rpc/socket/foo]
ncacn_unix_stream:[/tmp/6094]
ncacn_unix_stream:[/5423]
Note in the last case, because the endpoint is not represented by an absolute path, that the ncacn_unix_stream:[/var/dce/rpc/socket/5423] is assumed, and will be used to create the socket file. The entry in the endpoint map will also have an absolute path. This will not cause any problems when using the two forms interchangeably, because the relative path will always be expanded out to an absolute path before it is ever used.

The more detailed characteristics of the ncacn_unix_stream protocol sequence can now be described. The RPC runtime library recognizes when the client and server are on the same host, and will "encourage" the use of ncacn_unix_stream, when it is appropriate, in the following ways:
* rpc_ns_binding_import_next() will return all of the ncacn_unix stream bindings before it will return bindings for other protocol sequences;
* rpc_ns_binding_lookup_next() will return all of the ncacn_unix stream bindings in the lower positions of a binding vector that gets returned. For example, if a returned binding vector consists of 5 binding handles, and 2 of them are ncacn_unix_stream, then the ncacn_unix_stream bindings would occupy array elements [0] and [1], and the bindings for other protocol sequences would occupy the remaining elements, [2], [3], and [4]. Note that although the ncacn_unix_stream bindings will be in the lower elements of the binding vector, the ordering of the remaining binding handles is indeterminate;
* rpc_ns_binding_select () will always select the ncacn_unix_stream binding handles from a binding vector, until they have all been used. It will then resume its normal policy of randomly selecting amongst the binding handles of the other protocol sequences.

The above-mentioned preferences that the RPC runtime gives to ncacn unix_stream has the net effect of giving DCE applications a performance boost. Existing applications do not even need to be aware of these preferences. They will be virtually invisible to the application, and do not require any changes to existing programs.

with reference now to FIGURE 3, a method for managing RPCs that implement some of these preferences is illustrated. The method manages communication between client and server processes in a distributed computing environment, with the client process requesting a service from a server process using an OSF DCE remote procedure call (RPC). The client process resides on a host computer that is connected to a physical network having a transport layer and a network layer. Preferably, the host computer supports a UNIX-based operating system.

The method begins at step 30 by detecting whether a server process identified by a remote procedure call is located on the host computer. If so, client/server 15 of FIGURE 1 is being used, and at step 32 the RPC mechanism of FIGURE 2A returns to the client process a vector of binding handles including a first set and a second set. Each of the first set of binding handles includes a protocol sequence that establishes an interprocess communication path between the client process and the server process without use of the transport and network layers, with each of the second set of binding handles including a protocol sequence that establishes a communication path between the client process and the server process through use of the transport and network layers. At step 34, an attempt is made to execute the remote procedure call using one of the binding handles in the first set. If this fails, a test is performed at step 36 to determine whether all of the binding handles in the first set have been used. If the result of the inquiry is negative, the routine loops back and attempts to execute the RPC with another ncacn unix_stream" protocol sequence. If the result of the test at step 36 is positive, indicating that all such protocol sequences have been used, the method continues at step 38 to use one of the binding handles in the second set to attempt to execute the remote procedure call. The binding handles in the second set are accessed randomly.

The conditions under which the ncacn_unix_stream protocol sequence will not be utilized are:
* A DCE server application explicitly specifies the support of a particular protocol sequence. An example would be the use of rpc server_use_protseq() by a server to limit the protocol sequences it supports to be a subset of all protocol sequences available.
* A DCE client application chooses from amongst the bindings returned from the namespace by comparing against a particular component of the binding. An example would be comparing against the network address of the binding. Because ncacn_unix_stream bindings contain no network address, this comparison would never succeed (unless the client application was comparing against the "" string). Another example would be the case where a check is done on each binding, and the client is looking for a particular protocol sequence. Both of these examples are normally carried out by using the rpc_binding to_string_binding() routine, and then comparing the string format of the components that make up the binding.

For performance reasons, the ncacn_unix_stream binding handles returned from the rpc_ns_binding_<import/lookup>_next() routines will be fully bound. This is because the binding came from the RPC endpoint map, and had an endpoint in it. The ncacn_unix_stream binding information is not exported to the CDS namespace database, when the RPC API routine rpc ns_binding_export() is called. This is because ncacn_unix_stream bindings are only usable when the client and server DCE applications are on the same host. Because the CDS namespace can be read by DCE applications on any machine in the DCE Cell, the ncacn_unix_stream bindings in the CDS namespace database would not be of any use to a client that needed to communicate with a remote server.

Instead, the ncacn_unix_stream bindings are only registered in the RPC endpoint map database when a DCE server application calls the RPC API routine rpc_ep_register(). This is because there is an RPC endpoint map daemon running on every host machine in a DCE cell, which makes it a more logical place to store host specific information. When a client queries the CDS namespace for a compatible server binding, the RPC runtime determines if the call is for a server on the local host machine. If so, in addition to returning all of the bindings from the CDS namespace, the RPC runtime will go to the RPC endpoint map to see if there is a compatible ncacn_unix_stream binding. If there is, then this binding is given preference over bindings returned from the CDS namespace. If the client and server are on different hosts, then the endpoint map lookup is not done, since it would never produce a useable binding.

When a DCE server application exits under normal conditions, it will unregister its endpoints from the RPC endpoint map, among other things, before it exits. In the case of ip-based protocols, such as ncacn_ip_tcp and ncadg_ip_udp, the ports that the DCE application was listening on are cleaned up by the operating system, so no application action is required to free up the ports. The ncacn_unix_stream endpoints are user space files, and these are not removed by the operating system when a DCE application exits.

when allowing the RPC runtime to assign an endpoint to an ncacn unix_stream binding, as noted above the binding will be an Object UUID, which is guaranteed to be unique. This means there is no chance that a socket file will ever be used over again on two invocations of a DCE application. Therefore, the fact that a stale socket file is left over is not problematic in the short term. But over time, these socket files will accumulate. As discussed above, the socket files are zero length files, but each one occupies an inode entry in the file system in which it was created. It is therefore desirable to have some means of cleaning up these stale socket files. This is done by the RPC endpoint mapper (RPC daemon).

Note that only sockets in the /var/dce/rpc/socket directory get cleaned up automatically. If a DCE application creates its ncacn_unix stream endpoints using a directory other than this, it is the responsibility of the application or the application user to ensure that stale endpoints are cleaned up. This is done using the rpc.clean utility. The rpc.clean utility allows the user to specify a directory that should be checked for stale socket files. It searches the directory and removes any stale sockets files that are found. It performs the same cleanup that the RPC endpoint map does. As an additional safeguard against socket file accumulations, the rpc.clean utility is involved whenever the DCE management scripts dce.clean, rc.dce, or rmdce are run.

The above-described approach has been implemented, and performance of Local RPCs have improved by 10-40%. This helps boost the overall DCE system performance, since many DCE internal activities (i.e., those involving communication with the RPC daemon and security/namespace services) are performed using RPCs between processes running on the same machine.

Although the as described above, using the nomenclature of the DCE RPC architecture, a client process passes a "binding handle" to the server process, the present invention, however, is not limited to the DCE RPC architecture, but rather is applicable to any network environment where the client process passes to the server process a data structure that specifies the location of the server process and establishes the communication protocol to be used between the client and server processes.

Further implementation information is contained in the Appendix attached hereto, which provides a detailed design specification explaining how to add RPC support for the ncacn_unix_stream protocol sequence in one particular implementation using UNIX Domain sockets.

### APPENDIX

### 0.1.1 External Interface Descriptions

The external interface of RPC runtime and RPCD is changed as follows:
The user has the new ability to specify an additional protocol sequence in addition to those already supported. The new protocol sequence is named "ncacn_unix_stream". Anywhere that an API function parameter, environmental variable, or command line argument allows for the specification of the string format for a protocol sequence, the string "ncacn_unix_stream" will be allowed.

### 0.1.2 Internal Design Description

The RPC enhancement adds support for a new protocol sequence (ncacn_unix stream), that is used when a client and server exist on the same host machine.

This RPC enhancement is virtually invisible to the user, and is backwards compatible with existing client/server applications.

The invention is portable to other platforms, such as the IBM OS/2 platform (note that OS/2 has support for the UNIX Domain, via MPTS, and the Common Porting Platform (CPP) DLLs on OS/2 will allow almost all of the UNIX specific subroutine calls to be used without modification on OS/2).

The design of the RPC runtime library is such that the addition of a new protocol sequence is accomplished with very little modification to the existing code. This is achieved via two means: 1) Modular data structures, and 2) The use of entry point vectors. Modular data structures facilitate the effort of adding the new protocol sequence by providing a consistent mechanism by which to relate the various components that make up the protocol sequence. The majority of the RPC runtime code is common to all protocols, so the use of entry point vectors allows protocol specific routines to be accessed in-line, via an index into an array of functions. The protocol id is used as the index into the entry point vector. New protocol sequences require the addition of new routines to handle processing that is specific to that protocol sequence.

The ncacn_unix_stream protocol sequence is built using the AF_UNIX address family and a socket type of SOCK_STREAM. The socket address uses the structure sockaddr_un, using a complete path name specification as the interprocess communication mechanism. The client and server must reside on the same host to use this protocol sequence. The protocol sequence is connection-oriented, and uses the CN protocol id.

The rest of this section of the document discusses the RPC source files that require modification in order to implement the new protocol sequence. An attempt has been made to list the files, starting with wide implication changes, and narrowing down to more specific changes.

### 0.1.2.1 src/rpc/runtime/com.h

This is an existing file. The addition of the following constant identifiers are necessary. These constants are used throughout the RPC runtime code to access appropriate structures and properly index entry point vectors.

RPC protocol sequence id constant:
#define rpc_c_protseq_id_ncacn_unix_stream 5
RPC protocol sequence string constant:
#define rpc_protseq_ncacn_unix_stream "ncacn_unix_stream"
RPC Network Address Family constant:
#define rpc_c_naf_id_unix 1

### 0.1.2.2 src/rpc/runtime/comp.c

This is an existing file. The following table element additions are necessary. These table elements add support for the Unix Domain Address Family, as well as the ncacn_unix_stream protocol sequence.

The global array rpc_g_protseq_id[] was expanded as follows:

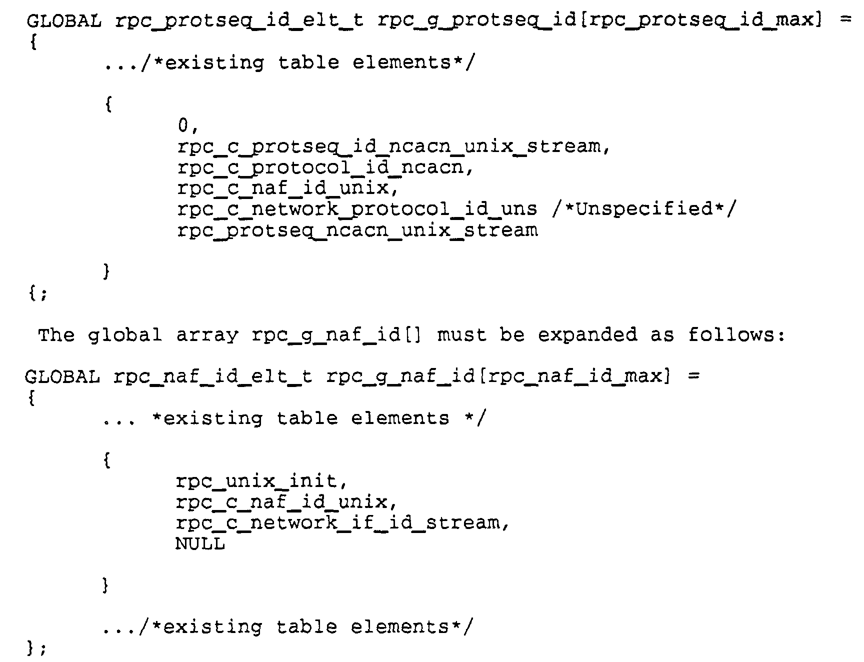

### 0.1.2.3 src/rpc/runtime/unixnaf.c

This is a new file that needs to be created. It provides support for the necessary entry point vector routines for the Unix Domain Network Address Family. There is an RPC structure called rpc_naf_epv_t that is defined as follows:

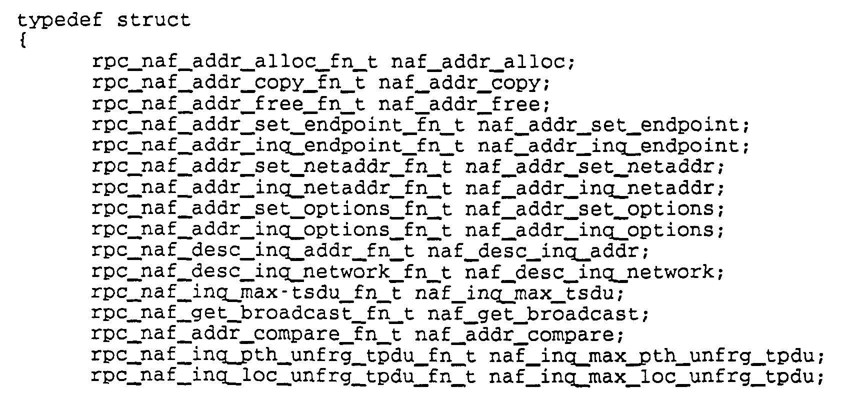

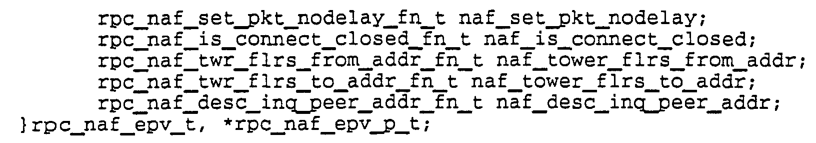

Each NAF has an initialization routine that loads up this structure, and adds it to the rpc_g_naf_id[] table entry for the specified NAF. From that point on, all calls to the Unix Network Address Family are made through these EPVS.

The following routines must be created to implement the Unix Network Address Family.

### 0.1.2.3.1 rpc_unix_init()

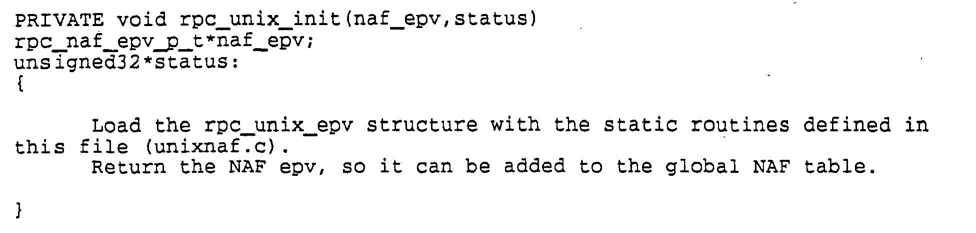

### 0.1.2.3.2 addr-alloc()

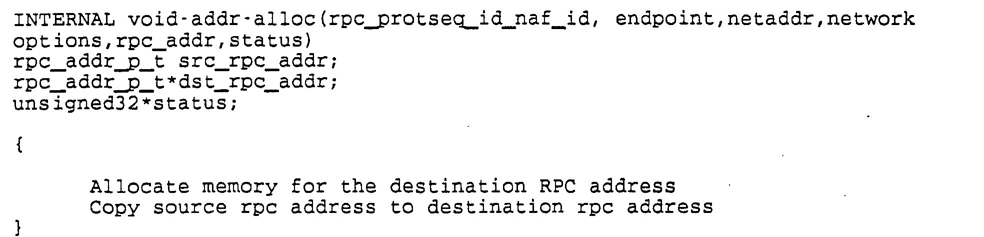

### 0.1.2.3.4 addr_free()

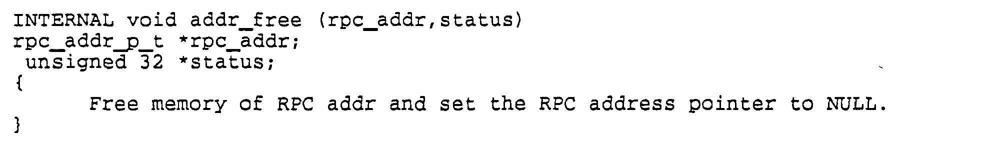

### 0.1.2.3.5 addr_set_endpoint()

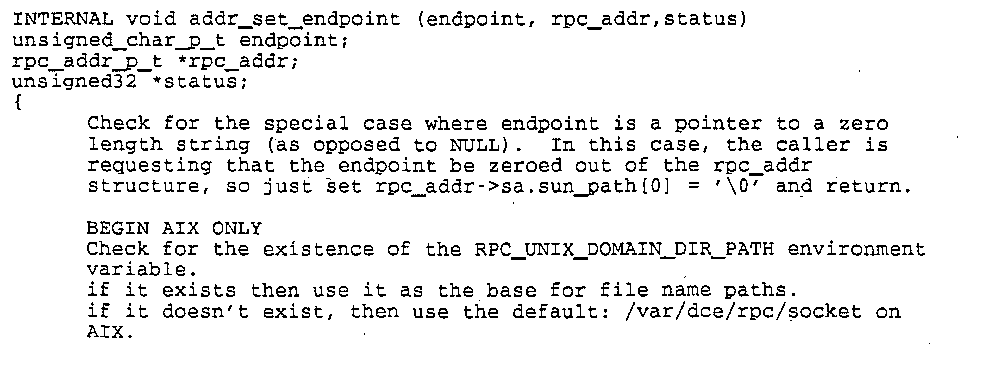

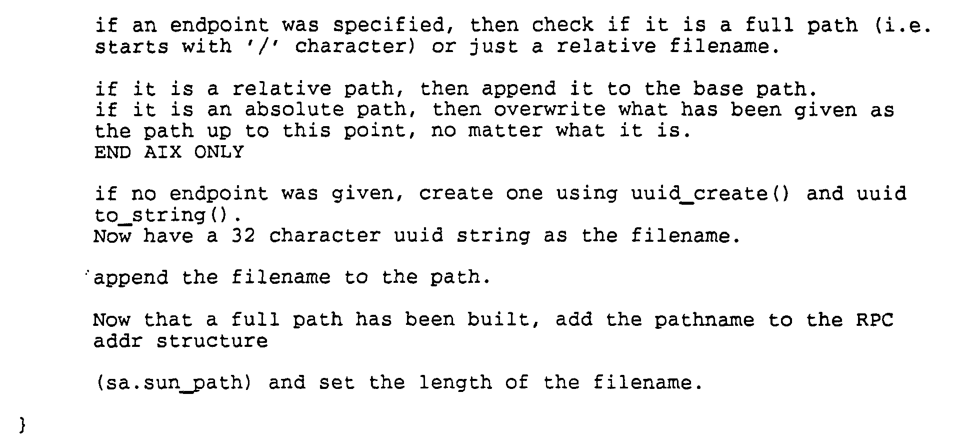

### 0.1.2.3.6 addr_inq_endpoint()

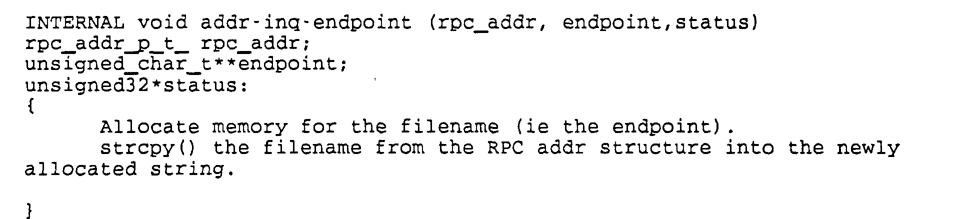

### 0.1.2.3.7 addr-set-netaddr()

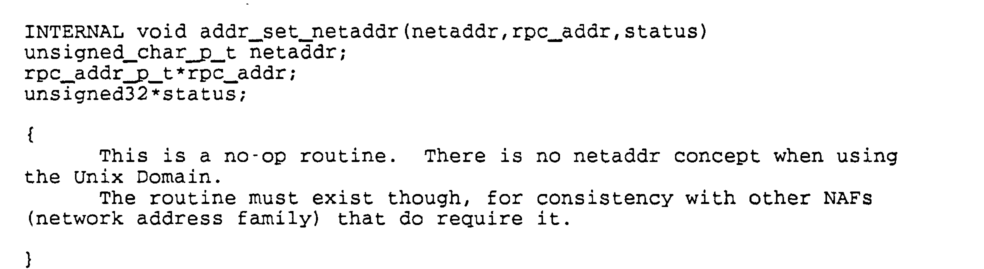

### 0/1/2/3/8 addr_inq_netaddr()

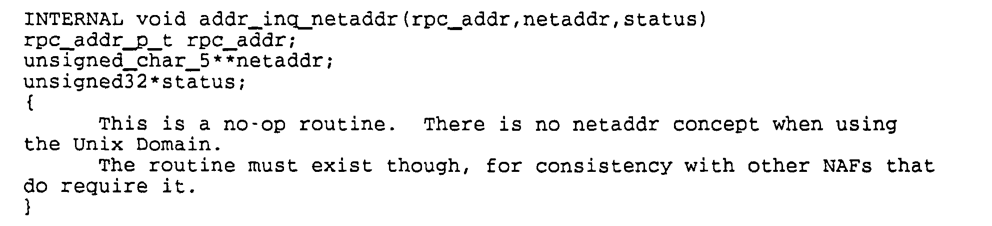

### 0.1.2.3.9 addr_set_options()

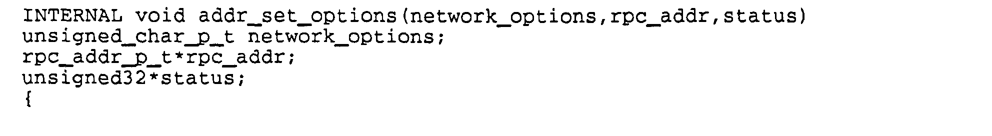

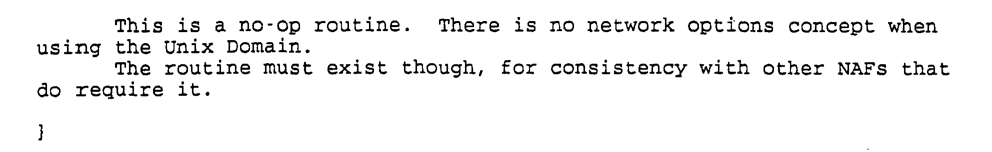

### 0.1.2.3.10 addr_inq_options()

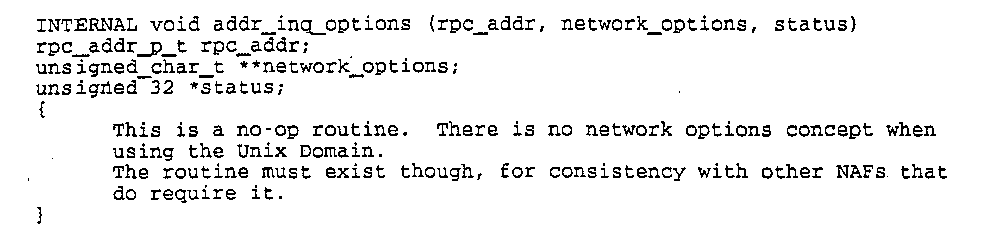

### 0.1.2.3.11 inq_max_tsdu()

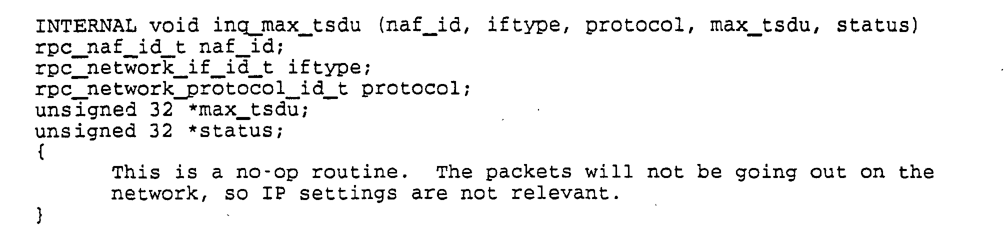

### 0.1.2.3.12 addr_compare()

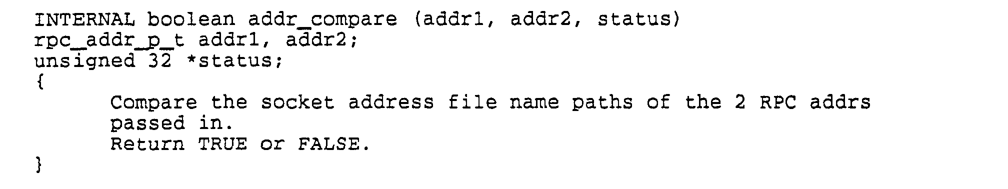

### 0.1.2.3.13 inq_max_pth_unfrag_tpdu()

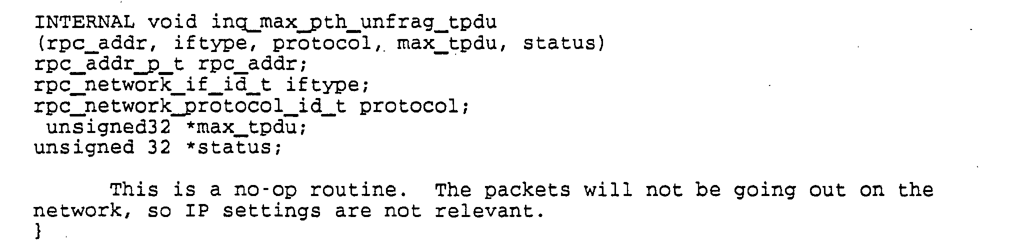

### 0.1.2.3.14 inq_max_loc_unfrag_tpdu()

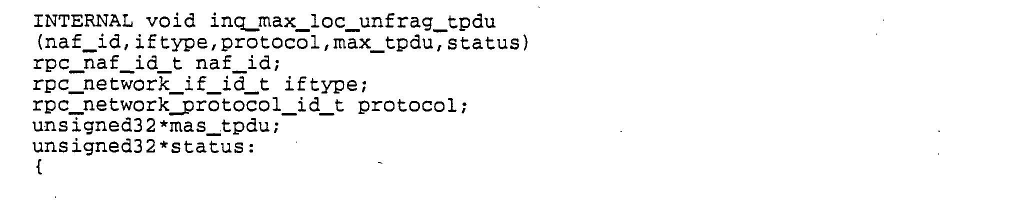

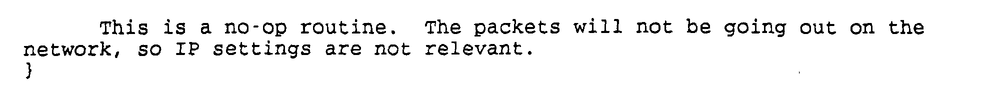

### 0.1.2.3.15 desc_inq_network()

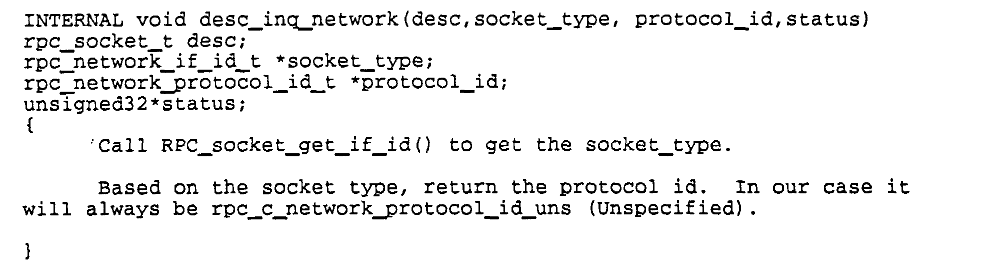

### 0.1.2.3.16 set _pkt_nodelay()

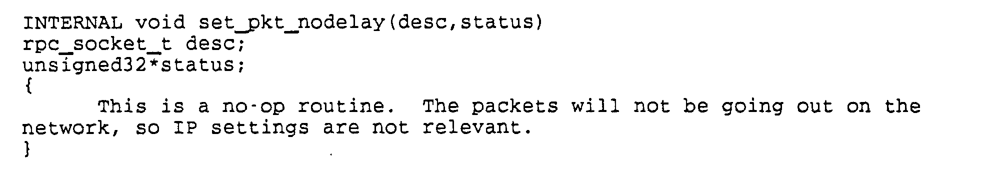

### 0.1.2.3.17 is_connect_closed()

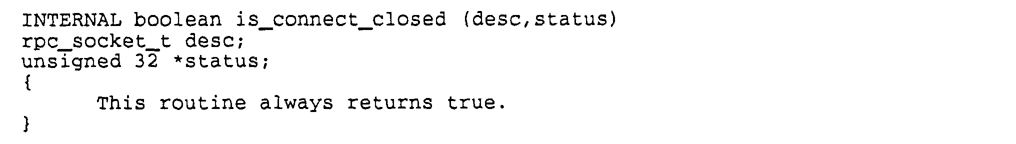

### 0.1.2.3.18 tower_flrs_from_addr()

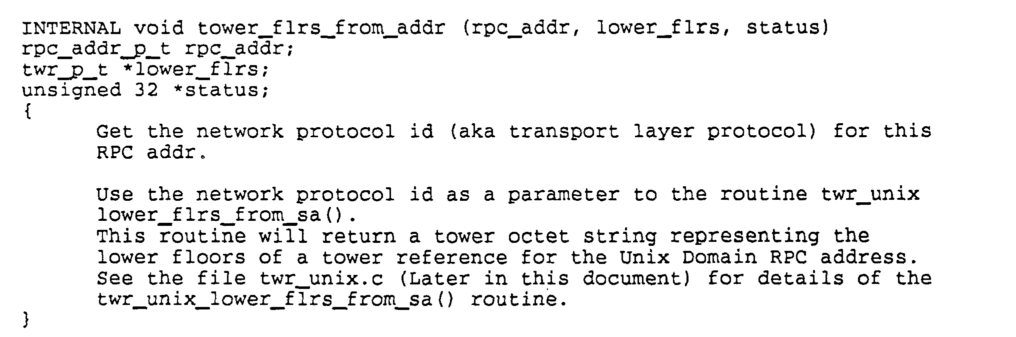

### 0.1.2.3.19 tower_flrs_to_addr()

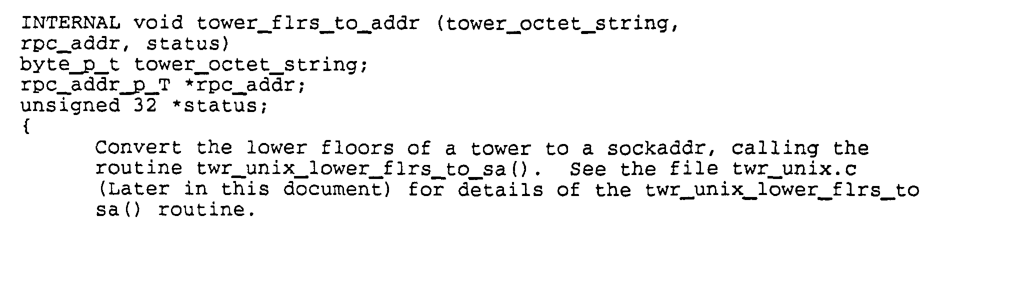

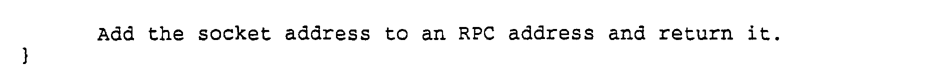

### 0.1.2.3.20 desc_inq_peer_addr()

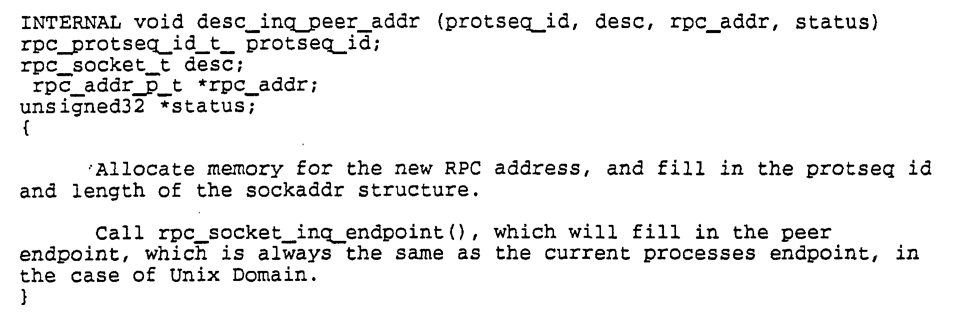

### 0.1.2.4 src/rpc/runtime/unixnaf.h

This is a new file that must be created. This file primarily contains prototypes for the Unix NAF epv routines. In addition, it contains a definition for the representation of a Unix Domain RPC address. It is defined as follows:

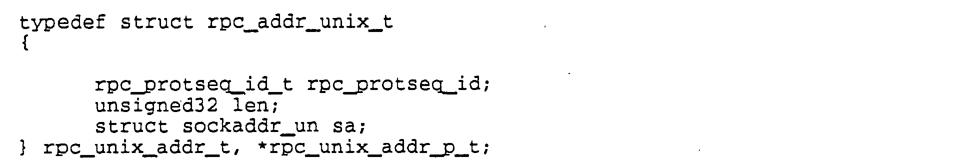

When RPC is executing command code, the RPC address is passed around as a quasi-opaque structure (rpc_addr_t), but this structure is cast to the RPC address structure for the appropriate family when it is passed to a NAF specific routine; in the case of unix stream, it is cast to rpc_unix addr_t.

Another necessary addition to this file is the default pathname to be used for creating filenames for use with Unix Domain socket calls on AIX. This is Operating System specific, and for example is not necessary on OS/2. When creating an endpoint, if the endpoint does not exist, or the endpoint to be used does not specify a full pathname, then the default pathname is used. The default pathname will be defined as follows:
#ifdefined(AIX_PROD)
#define RPC_DEFAULT_UNIX_DOMAIN_PATH"_"/var/dce/rpc/socket"
#endif

On the OS/2 operating system, Unix Domain socket files are only used internally. No user viewable file gets created. The OS/2 operating system handles the administrative tasks associated with the socket file (ie cleanup). No special path generation is necessary.

### 0.1.2.5 src/rpc/runtime/RIOS/unixnaf_sys.c

This is a new file that must be created. It contains routines that are system specific, as pertains to the Unix Domain Network Address Family.

### 0.1.2.5.1 rpc_unix_desc_inq_addr()

Receive a socket descriptor which is queried to obtain family, endpoint and network address. If this information appears valid for a Unix Domain address, space is allocated for an RPC address which is initialized with the information obtained from the socket. The address indicating the created RPC address is returned in rpc_addr.

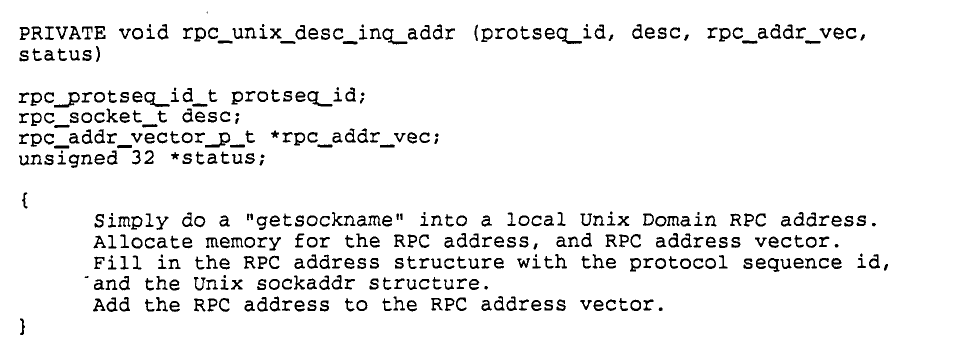

### 0.1.2.5.2 rpc_unix_get_broadcast()

This routine is a no-op, but is necessary, so that there will be an entry in the NAF epv.

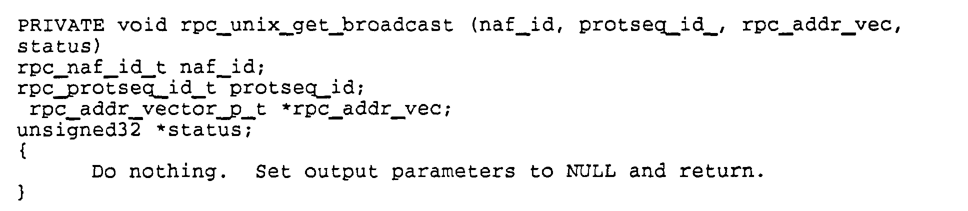

### 0.1.2.6 src/rpc/runtime/twr_unix.h

This is a new file, and must be created. This file contains declarations and prototypes specific to the twr_unix.c file. Currently, this file only contains a prototype for the routing rpc_rpcd_is_running().

### 0.1.2.7 src/rpc/runtime/twr_unix.c

This is a new file that must be created. This file contains routines specific to doing conversions from tower representations to socket addresses, and vice versa. It also contains a utility routine, used by both the RPC runtime and RPCD.

### 0.1.2.7.1 twr_lower_flrs_from_sa()

Creates the canonical representation of a tower's lower floors from a sockaddr for unix domain. The canonical form can be transmitted on the wire, or included in a DSN tower.

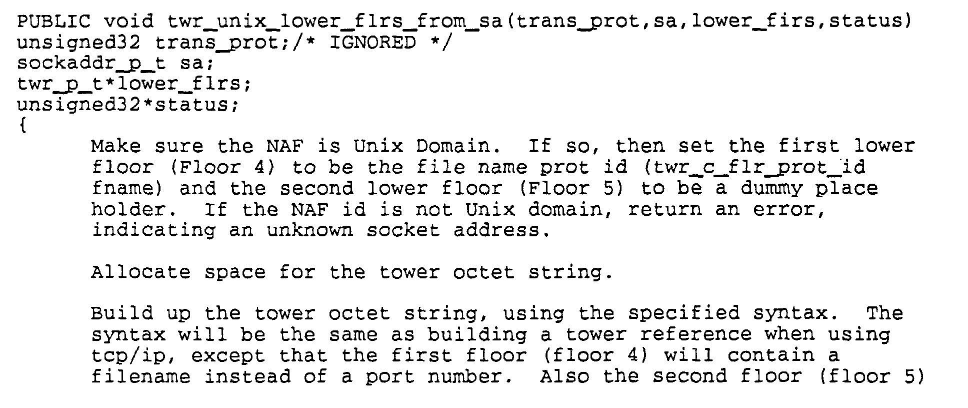

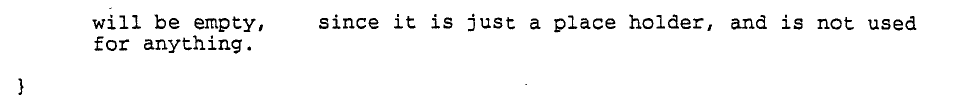

### 0.1.2.7.2 twr_unix_lower_flrs_to_sa()

Creates a Unix Domain sockaddr from the canonical representation of a Unix Domain protocol tower's lower floors.

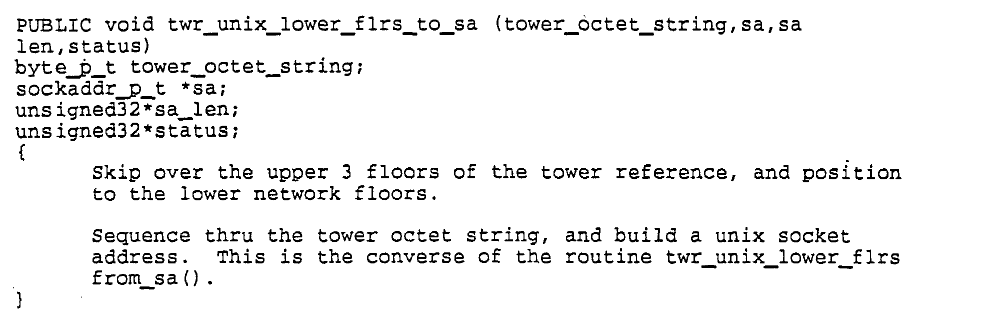

### 0.1.2.7.3 rpc_rpcd_is_running()

This is a new routine. It is used for two purposes: 1) the RPCD will use _it during initialization to determine if an instance of RPCD is already running, and 2) the RPC runtime will use it to determine if the RPCD on the local host is running, and if it supports the ncacn_unix_stream protocol sequence.

This routine checks for an instance of RPCD that supports ncacn_unix stream. This is done by looking for the existence of the rpcd endpoint file (/var/dce/rpc/socket/135). If the file does not exist, then no RPCD is running with support for Unix Streams. If the file does exist, it uses it to attempt to connect to the RPCD instance. If the connect fails, then no RPCD is running with support for Unix Streams. Remove the file. If the connect is successful, then RPCD is running. Do not remove the file.

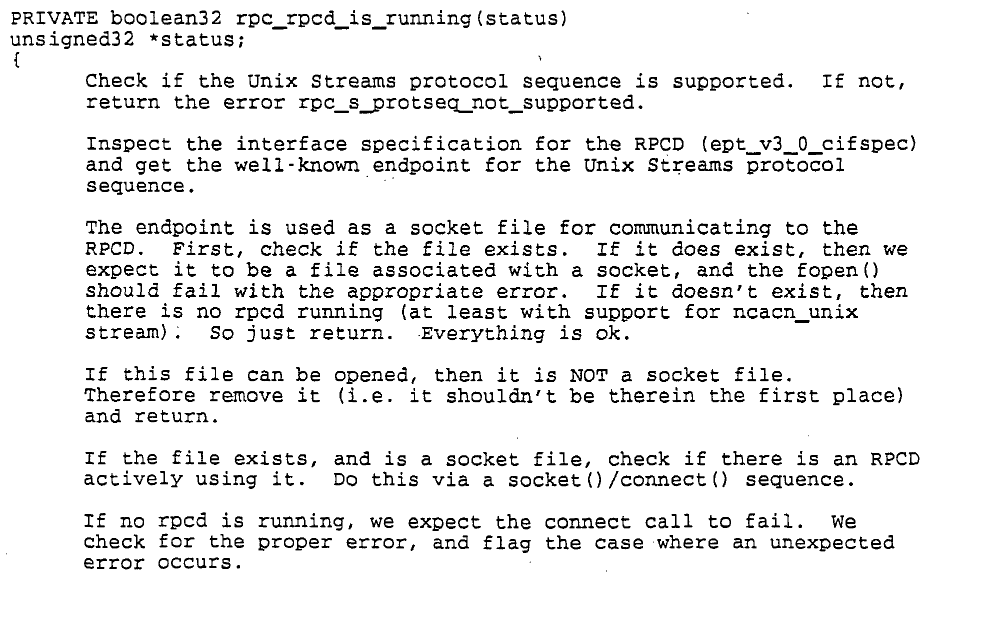

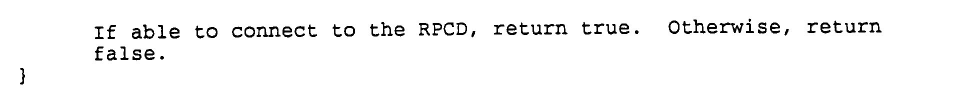

### 0.1.2.8 src/rpc/runtime/twrp.h

This is an existing file. This file contains declarations that are related to the construction and examination of RPC tower reference structures and octet strings. This file will be modified to include the following additional lines:

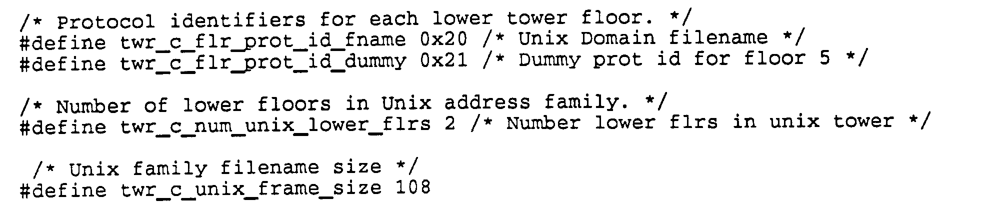

NOTE: The Unix Domain tower reference only makes use of 4 tower floors, but a fifth floor is included, and contains no data. This is because the algorithm the RPC runtime uses to examine a tower octet string requires 5 floors in order for it to be considered a "full tower." The Unix domain is a full tower, but only 4 floors have data associated with them.

### 0.1.2.9 src/rpc/runtime/comtwrref.c

This is an existing file. This file contains routines that operate on the runtime reference representation of protocol towers.

### 0.1.2.9.1 rpc_tower_ref_inq_protseq_id()

This routine must be modified. This routine contains a static table that contains mappings of all available protocol sequences to the combination of protocol ids for upper floor 3 and the lower tower floors that make up the tower reference for that protocol sequence. This table must be modified, to include the addition of an entry for the ncacn_unix_stream protocol sequence:

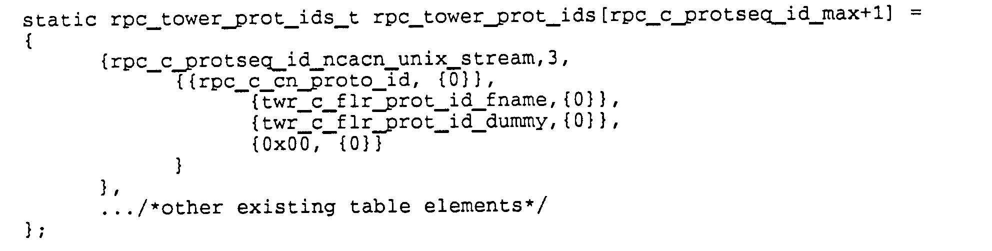

### 0.1.2.10 src/rpc/runtime/nsp.h

This is an existing file. This file contains private namespace typedefs, constant definitions, etc. A new data structure is necessary for use in the routine rpc_ns_binding_lookup_next(). This data structure is used to store list elements. These elements contain information about each unique namespace entry that is returned from the namespace during a lookup. The information that is stored includes: the namespace entry name, as well as the interface specifier and (optionally) object uuids associated with the namespace entry. There is also a field that will contain the unix stream binding handle, if one is found in the course of the lookup. See the description of rpc_ns_-binding_lookup_next() given below for details of how this data structure is used. The data structure looks like this:

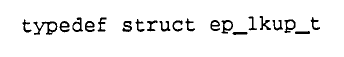

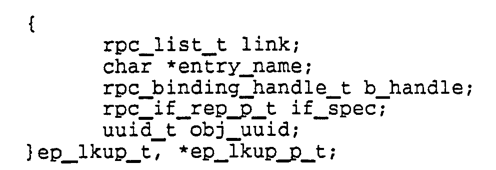

### 0.1.2.11 nslookup.c

This is an existing routing. It returns a list of binding handles of one or more compatible servers (if found) from the name service database. This touting must be modified so that the ncacn_unix_stream binding handles associated with each unique namespace entry that gets resolved in the lookup are prepended to the binding vector that gets returned to the user. This means that the lookup proceeds as normal, and then, just before returning to the user, the routine makes a call to see if there are any ncacn_unix_stream bindings in the endpoint map that match the object uuids and interface ids of the bindings that are in the binding vector. If there are, then they are prepended to the binding vector, and the concatenated vector is given to the user. The following return statements in rpc_ns_binding_lookup_next() need to be modified to get local bindings before returning:

NOTE: See below for the details of the routine rpc_prepend_local. bindings().

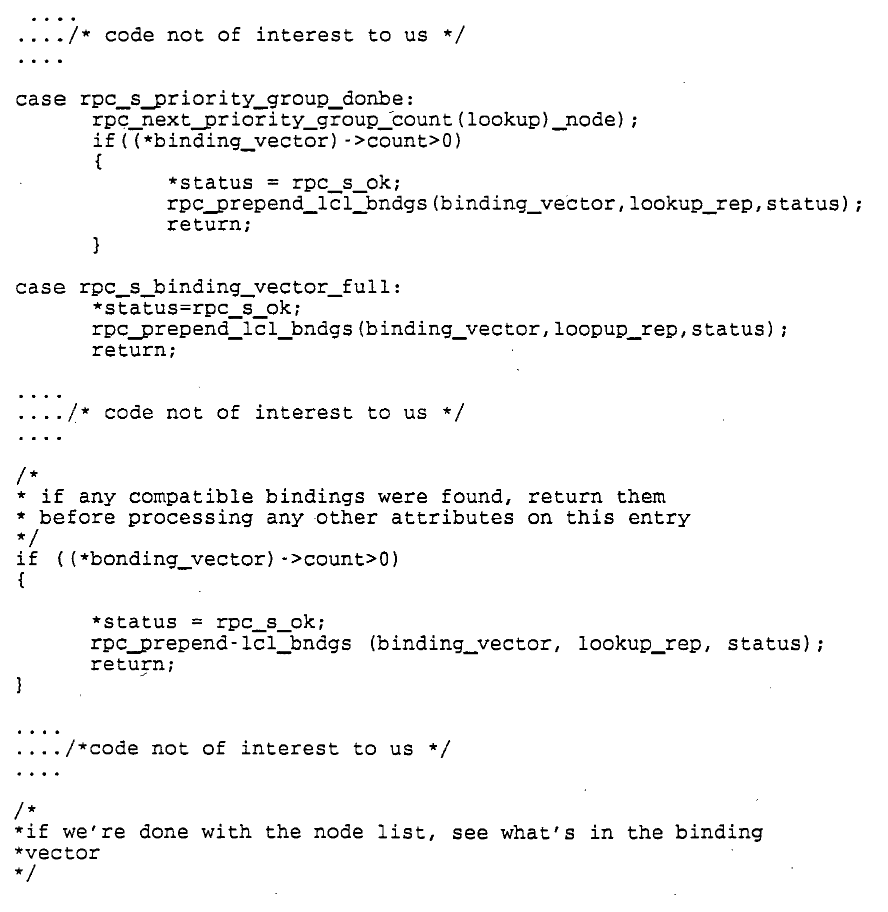

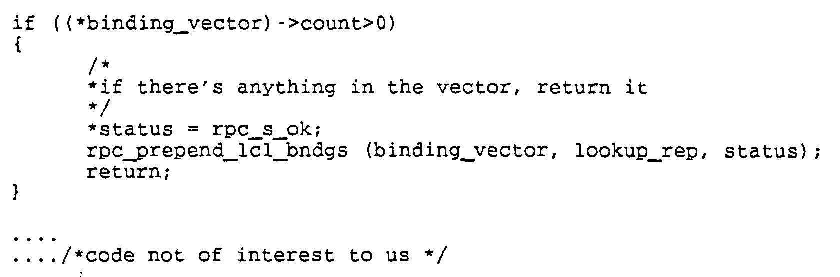

### 0.1.2.11.2 rpc_prepend_local_bindings()

This routine has been created. This routine takes as input a list of entries returned from the namespace. These entries contain among other things the interface specifier and object uuids associated with the namespace entry. This routine uses these interface specifiers and object uuids to make calls to the endpoint map, to see if there are any binding handles there for match. If a match is found, then the protocol sequence of the binding handle is inspected. If the protocol sequence is ncacn unix_stream, then the binding is prepended to the binding vector. In this way, when the routine returns, all the ncacn_unix_stream binding handles that match the interface specification and object uuid will be at the head of the binding vector. The routine looks like this:

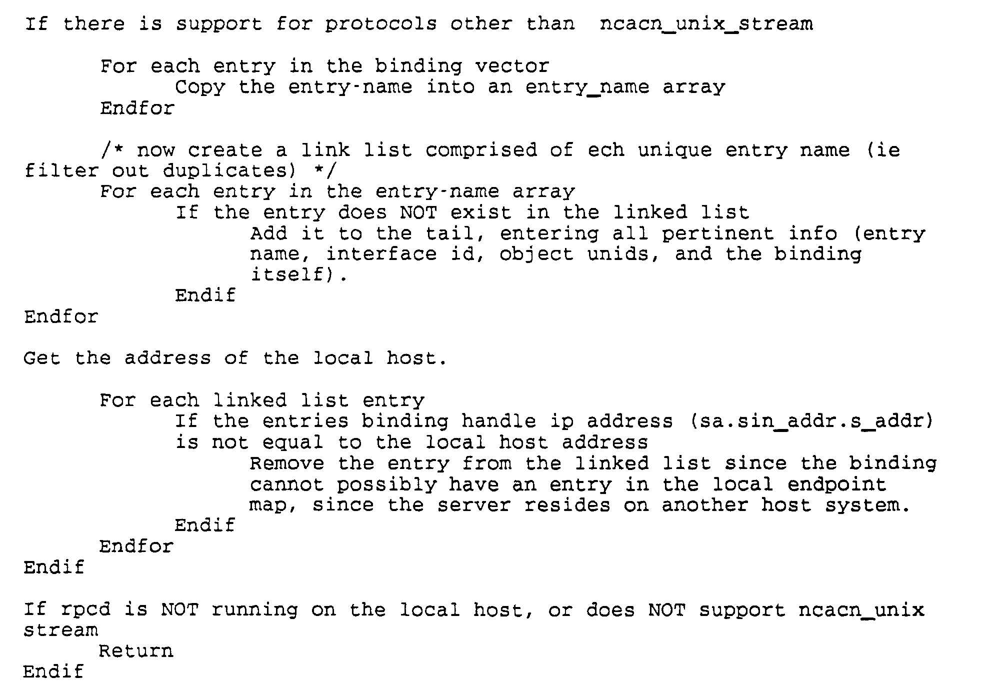

Allocate memory for a binding vector that can hold all of the existing binding handles, as well as those that could potentially come back from the rpcd endpoint map.

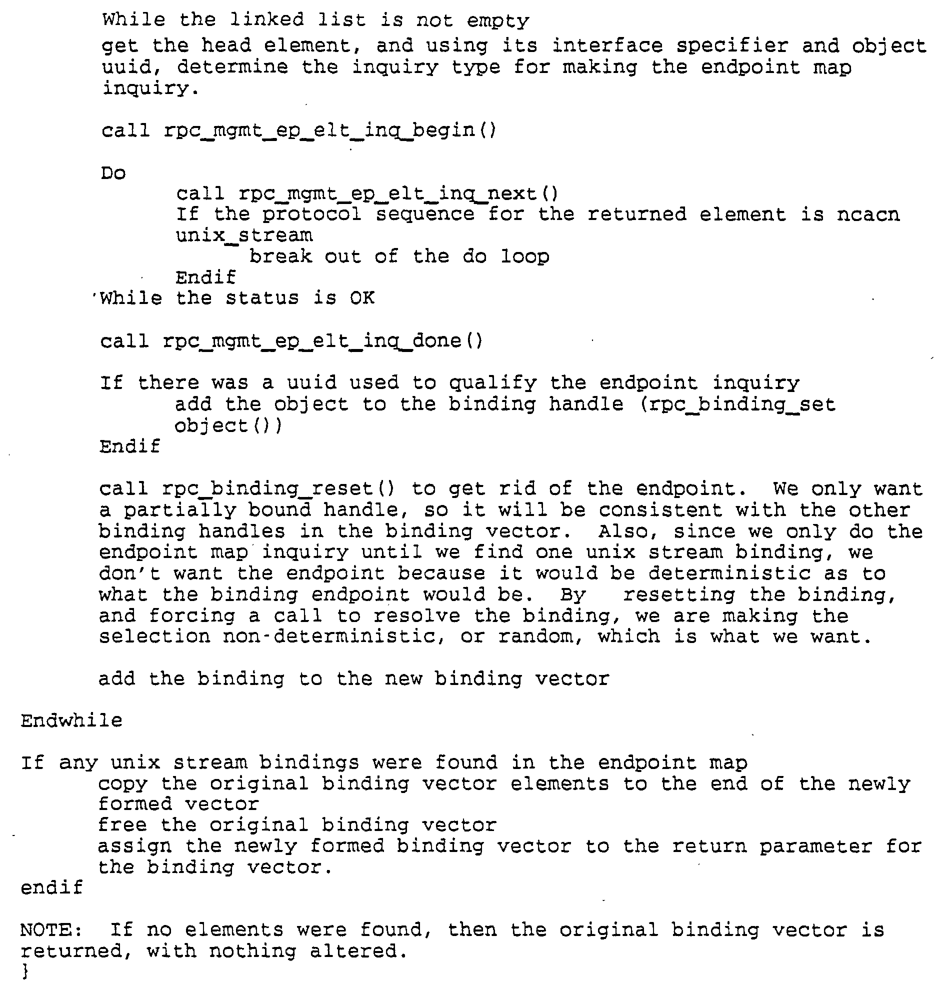

### 0.1.2.11.3 rpc_ns_binding_select()

This is an existing routine. It randomly selects a binding handle from a vector of binding handles passed into the routine. This routine is modified so that the unix stream binding handles will be chosen first. After all unix stream binding handles have been chosen, then the remaining binding handles (representing other protocol sequences) will be chosen randomly. In the event that there is more than one unix stream binding handle, the routing should randomly select from amongst them. the algorithm goes like this:

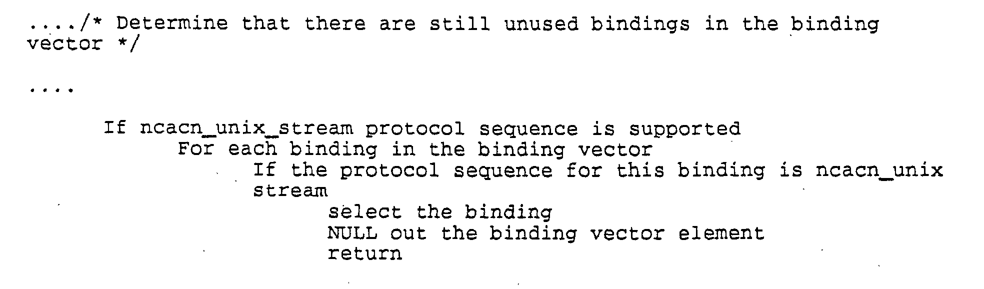

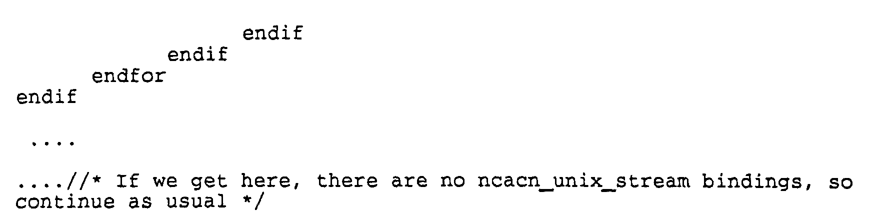

### 0.1.2.12 src/rpc/runtime/nsbndexp.c

This is an existing file. This file contains routines used to export binding handles to the CDS namespace. These routines will be modified so that when a request to export binding handles to the CDS namespace is made, any binding handles that specify the Unix Domain Network Address Family will be filtered out. Unix NAF bindings will only be registered with the RPCD endpoint map.

### 0.1.2.12.1 rpc_ns_binding_export()

This is an existing routine. It exports a vector of bindings to the namespace. Since we do not want Unix Stream bindings being exported, the following algorithm will be employed before allowing a binding to be exported:

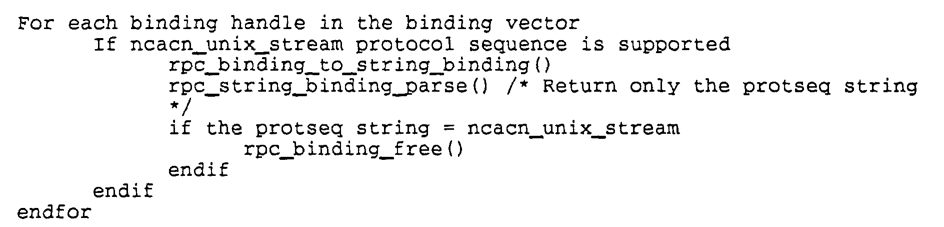

NOTE: The freeing of the bindings that are ncacn_unix_stream is done on binding vector elements that are in a copy of the original binding vector. So there is no change to the binding vector that the user passes in to the routine.

### 0.1.2.13 src/rpc/runtime/nsmgmt.c

This is an existing file that is modified. The management routine to unexport binding/object information from a namespace entry must be changed so that when ncacn_unix_stream is the only protocol sequence supported, an error will not be generated.

### 0.1.2.13.1 rpc_ns_mgmt_binding_unexport()

NOTE: This routine rpc_ns_binding_unexport() calls this routine directly.

This is an existing routine that is modified. Since unix stream binding handles do not exist in the namespace, if ncacn_unix_stream is the only protocol sequence supported, then there can not be any bindings in the namespace for the requested entry, so simply NULL out the interface identifier. This will cause the routine to not try and unexport bindings. If there are any object uuids that the caller wants unexported, these will be handled as usual.

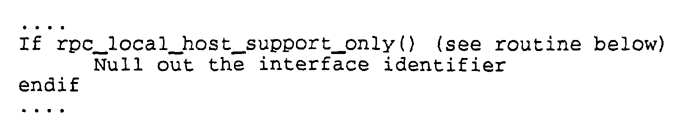

### 0.1.2.13.2 rpc_local_host_support_only()

This is a new routine. It queries the global protocol sequence table, and determines if ncacn_unix_stream is the only supported protocol sequence. It returns true or false. This routine is only called from places where it is known that ncacn_unix_stream is supported, so no check is necessary as to whether ncacn_unix_stream itself is supported. The code is as follows:

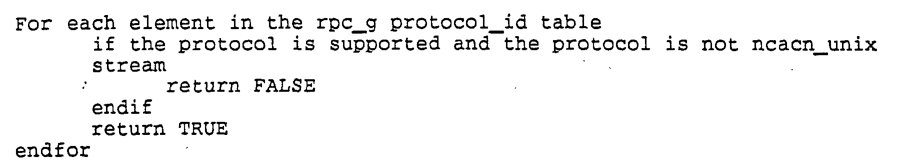

### 0.1.2.14 src/rpc/sys_idl?ep.ids

The file src/rpc/sys_ids/ip.ids contains the RPC interface used to access the RPCD endpoint database. This idl file contains the well-inown endpoint that RPCD uses everytime it runs. The endpoint is specified in this file on a per-protocol sequence basis, so an addition must be made to this file for the ncacn_unix_stream protocol sequence as follows:

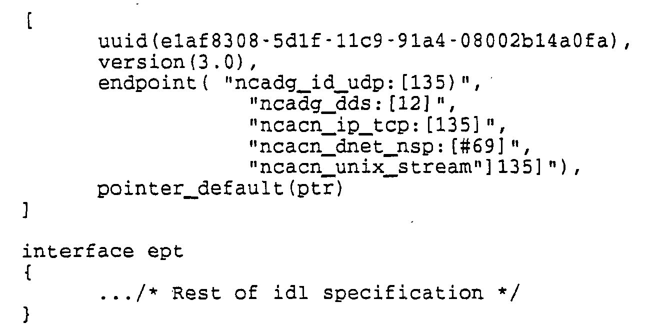

Note that the endpoint will be converted into a filename, using the rules given in the routing rpc_addr_set_endpoint(),described previously in this document. This means the 135 will be prepended with the path set in the RPC_DEFAULT_UNIX_DOMAIN_PATH definition (see description of file "twr unix.c"), depending on the platform in use.

### 0.1.2.15 src/rpc/rpcd/rpcd.c

This is an existing file. This file needs to be modified so that when the rpcd server comes up, it checks if the socket file that is used to listen for requests over ncacn_unix_stream exists. If it does, then it needs to delete it. This is because a socket file cannot be created if the file already exists.

### 0.1.2.15.1 main ()

The following code must be added after the database has been initialized, but before the protocol sequence support is set up:

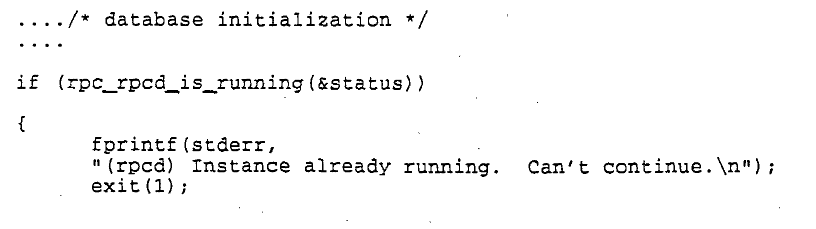

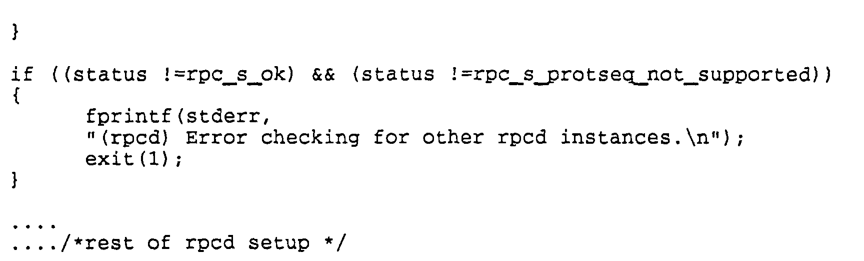

### 0.1.2.16 src/libdce/RIOS/libdce.syms

This is an existing file. This file needs to be updated to include the routine rpc_rpcd_is_running(). This is so that routines or programs outside of libdce.a can access the routine. Since rpcd calls this routine, it needs to be here. All that is necessary is to add the following line to libdce.-syms:
rpc_rpcd_is_running

### 0.1.2.17 Auto Handles

The use of the [auto_handle] attribute indicates that application code will not be responsible for obtaining a binding handle, and/or resolving an endpoint for that binding handle. The [auto_handle] attribute specifies that the RPC runtime will handle all of this. All the user specifies is the namespace entry where the RPC runtime should start looking for a binding handle (This is done via the environment variable RAC_DEFAULT_ENTRY). The RPC runtime has the intelligence to use ncacn unix_stream in the case where a client and server are on the same host.

### 0.1.2.18 Utilities

The implementation of this feature requires the creation of some utilities to perform administrative duties. These are outlined below.

### 0.1.2.18.1 src/rpc/utils/rpcclean

This utility will simply call the RPC runtime routing rpc_network_inq protseqs(), and print out the resulting protocol sequence string vector, one protocol sequence to a line. This utility will be used to mkdce to determine the protocol sequences that are available on a given host. Currently the supported protocol sequences are hard-wired into the mkdce script. The script can also be used as a quick way for an administrator to determine the supported protocol sequences on a given host. The code for this utility is given below:

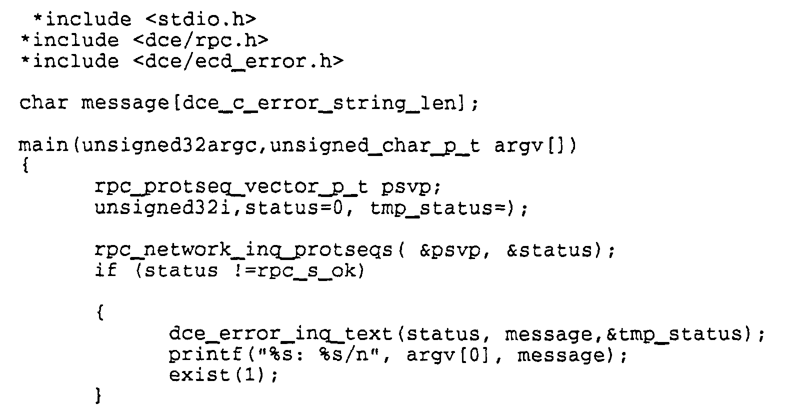

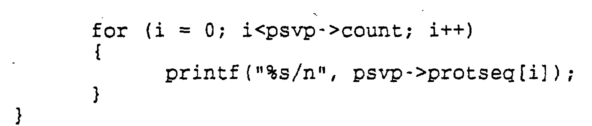

### 0.1.2.19 Installp Utility

The install image for DCE is enhanced so that it creates (or overwrites) the directory /usr/tmp/rpc. Without this directory, DCE as well as any DCE applications will not work over ncacn_unix_stream.

### 0.1.3 Compatibility

This feature should not cause any compatibility problems.

### 0.1.3.1 Backwards Compatibility

Existing applications will be able to upgrade DCE to include this feature, and run without modification. Client/Server applications on different hosts, where one is enhanced to use this feature, and the other is not, will be able to run without modification also. This is more an issue of coexistence, rather than compatibility, since the Unix Domain cannot be used across machines.

### 0.1.4 Installation and Configuration Impacts

When DCE is installed on a machine, the directory /usr/tmp/rpc must be created. If the directory already exists, then the directory should be wiped out and recreated. This is where the Unix Domain socket files will be created, and any files left hanging around this directory are stale, since it is assumed that all DCE applications are halted when a DCE installation upgrade takes place.

Configuration of DCE will be expanded. An administrator will be able to specify that a DCE instance only use ncacn_unix_stream as its supported protocol sequence. This will create a cell that cannot communicate with processes on different hosts, since Unix Domain sockets require that all interprocess communications take place on the same host.

### 0.1.5 Performance and Storage Estimates

Performance of RPC calls will improve by 10-40% in the case where the client and server reside on the same host. Performance when the client and server exist on different hosts will not be affected in any way.

Storage estimates are not an issue. RPCD will store an extra endpoint for each server that does an rpc_ip_register() when support for Unix Domain sockets is allowed. A socket file will be created for each Unix Domain endpoint that a server registers, but this file is zero length.

The rpcclean utility (discussed previously in this document) can be run to remove stale socket files left lying around on the system. This will reduce the number of used inodes on the filesystem.

## Claims

1. A method for managing communication between a client process and a server process in a distributed computing environment, the client process residing on a host computer (15) that is connected to a physical network (14) having a transport layer and a network layer, comprising the steps of:
(a) when a remote procedure call is made by the client process, detecting whether a server process identified by the remote procedure call is located on the host computer;
(b) if the server process is located on the host computer, establishing an interprocess communication path between the client process and the server process without use of the transport and network layers of the physical network; and
(c) executing the remote procedure call.

2. The method of Claim 1 wherein the interprocess communication path is established by the client process passing to the server process a binding handle including an endpoint.

3. The method of Claim 2 wherein the endpoint includes a full pathname to a socket file.

4. The method of Claim 3 wherein the socket file is a unique universal identifier object.

5. The method of any preceding Claim, wherein the remote procedure call is executed using a send and receive messaging facility of an operating system of the host computer.

6. The method of any preceding Claim, wherein the client process returns a vector of data structures at least one of which includes a protocol sequence to establish the interprocess communication path between the client process and the server process.

7. The method of Claim 6 wherein each of the data structures in the vector includes a protocol sequence to establish an interprocess communication path between the client process and the server process without use of the transport and network layers.

8. The method of Claim 6 wherein the vector of data structures includes a set of data structures, each of which establishes an interprocess communication path between the client process and the server process without use of the transport and network layers, and at least one data structure having a protocol sequence that establishes a communication path between the client process and server process through use of the transport and network layers.

9. The method of Claim 8 further comprising the step of:
forcing the client process to use protocol sequences from the set of data structures before using the protocol sequence that establishes the communication path through use of the transport and network layers.

10. The method of claim 1, wherein said establishing step includes returning to the client process a vector of binding handles including a first set and a second set, each of the first set of binding handles including a protocol sequence to establish an interprocess communication path between the client process and the server process without use of the transport and network layers, each of the second set of binding handles including a protocol sequence to establish a communication path between the client process and the server process through use of the transport and network layers; the method further comprising the steps of:
attempting to execute the remote procedure call using one of the binding handles in the first set until all of the binding handles in the first set have been used; and
if all of the binding handles in the first set have been used and an interprocess communication path has not been established, using one of the binding handles in the second set to attempt to execute the remote procedure call.

11. The method of any preceding Claim, wherein the host computer supports a UNIX-based operating system; and wherein said establishing step includes returning to the client process a binding handle having a protocol sequence "ncacn_unix_stream" to establish the interprocess communication path between the client process and the server process, where in the protocol sequence "ncacn" is a connection-oriented RPC protocol, "unix" identifies a UNIX Network Address Family AF_UNIX communication domain and "stream" identifies a UNIX domain socket.

12. A computer system providing a distributed computing environment in which users can access distributed resources and process applications, the computer system including a host computer (15) connected to a local area network (14) having a transport layer and a network layer, comprising:
means responsive to a remote procedure call (RPC) from a client process for detecting whether a server process identified by the RPC is located on the host computer; and
means responsive to the detecting means for using an interprocess communication mechanism of the host computer to facilitate the RPC.

13. A computer system for managing communication between a client process and a server process in a distributed computing environment, the client process residing on a host computer (15) that is connected to a physical network (14) having a transport layer and a network layer, said system comprising:
(a) means responsive to a remote procedure call being made by the client process, for detecting whether a server process identified by the remote procedure call is located on the host computer;
(b) means responsive to the server process being located on the host computer, for establishing an interprocess communication path between the client process and the server process without use of the transport and network layers of the physical network; and
(c) means for executing the remote procedure call.

## Patentansprüche

1. Ein Verfahren, um die Kommunikation zwischen einem Klient- und einem Server-Prozeß in einer verteilten Computerumgebung zu verwalten, wobei der Klient-Prozeß in einem Host (15) gespeichert ist, der mit einem physischen Netz (14), das eine Transport- und eine Netzwerkschicht hat, verbunden ist, und das Verfahren folgende Schritte enthält,
(a) um bei einem vom Klient-Prozeß ausgeführten Remote Procedure Call zu erkennen, ob ein vom Remote Procedure Call identifizierter Server-Prozeß im Host vorhanden ist;
(b) um, wenn der Server-Prozeß im Host vorhanden ist, einen Interprozeß-Kommunikationspfad zwischen dem Klient- und dem Server-Prozeß zu erstellen, ohne die Transport- und Netzwerkschichten des physischen Netzes zu nutzen; und
(c) um den Remote Procedure Call auszuführen.

2. Das Verfahren nach Anspruch 1, wobei der Interprozeß-Kommunikationspfad vom Klient-Prozeß erstellt wird, der ein "binding handle" mit einem Endpunkt an den Server-Prozeß überträgt.

3. Das Verfahren nach Anspruch 2, wobei der Endpunkt einen vollständigen Pfadnamen in einer Socket-Datei enthält.

4. Das Verfahren nach Anspruch 3, wobei die Socket-Datei ein einzigartiges universelles Identifizierungsobjekt ist.

5. Das Verfahren nach einem vorhergehenden Anspruch, wobei der Remote Procedure Call ausgeführt wird, indem eine Sende- und Empfangsnachrichtenfunktion von einem Betriebssystem des Hosts benutzt wird.

6. Das Verfahren nach einem vorhergehenden Anspruch, wobei der Klient-Prozeß einen Vektor mit Datenstrukturen zurücksendet, von denen wenigstens eine eine Protokollsequenz enthält, um den Interprozeß-Kommunikationspfad zwischen dem Klient-Prozeß und dem Server-Prozeß zu erstellen.

7. Das Verfahren nach Anspruch 6, wobei jede der Datenstrukturen im Vektor eine Protokollsequenz enthält, um einen Interprozeß-Kommunikationspfad zwischen dem Klient- und dem Server-Prozeß zu erstellen, ohne die Transport- und Netzwerkschichten zu benutzen.

8. Das Verfahren nach Anspruch 6, wobei der Vektor mit Datenstrukturen einen Satz Datenstrukturen enthält, von denen jede einen Interprozeß-Kommunikationspfad zwischen dem Klient- und dem Server-Prozeß erstellt, ohne die Transport- und Netzwerkschichten zu benutzen, und wenigstens eine Datenstruktur eine Protokollsequenz hat, die zwischen dem Klient-Prozeß und dem Server-Prozeß mittels der Transport- und Netzwerkschichten einen Kommunikationspfad erstellt.

9. Das Verfahren nach Anspruch 8, das außerdem den Schritt enthält,
um den Klient-Prozeß zu zwingen, die Protokollsequenzen aus dem Satz Datenstrukturen zu benutzen, bevor die Protokollsequenz benutzt wird, die den Kommunikationspfad mittels der Transport- und Netzwerkschichten erstellt.

10. Das Verfahren nach Anspruch 1, wobei der Erstellungsschritt einen Vektor mit "binding handles", die einen ersten und einen zweiten Satz enthalten, an den Klient-Prozeß zurücksendet, wobei der erste Satz mit "binding handles" eine Protokollsequenz enthält, um einen Interprozeß-Kommunikationspfad zwischen dem Klient-Prozeß und dem Server-Prozeß ohne die Transport- und Netzwerkschichten zu erstellen, wobei der zweite Satz mit "binding handles" eine Protokollsequenz enthält, um zwischen dem Klient- und dem Server-Prozeß mittels der Transport- und Netzwerkschichten einen Kommunikationspfad zu erstellen; und das Verfahren außerdem die folgenden Schritte enthält:
der Versuch, den Remote Procedure Call mittels einer der "binding handles" im ersten Satz auszuführen, bis alle "binding handles" im ersten Satz benutzt wurden; und
wenn alle "binding handles" im ersten Satz benutzt und kein Interprozeß-Kommunikationspfad erstellt wurde, mittels einer der "binding handles" im zweiten Satz zu versuchen, den Remote Procedure Call auszuführen.

11. Das Verfahren nach einem vorhergehenden Anspruch, wobei der Host ein auf UNIX basierendes Betriebssystem unterstützt, und der Erstellungsschritt die Rücksendung einer "binding handle" enthält, die eine Protokollsequenz "ncacn_unix_stream" hat, um den Interprozeß-Kommunikationspfad zwischen dem Klient- und dem Server-Prozeß zu erstellen, wobei die Protokollsequenz "ncacn" ein verbindungsorientiertes RPC-Protokoll ist, "unix" eine UNIX Network Address Family AF_UNIX Kommunikations-Domain bezeichnet, und "stream" ein UNIX Domain-Socket bezeichnet.

12. Ein Computersystem, das eine verteilte Computerumgebung bereitstellt, in der die Benutzer auf verteilte Ressourcen und Prozeßanwendungen zugreifen können, wobei das Computersystem einen Host (15) enthält, der mit einem Local Area Network (14) verbunden ist, das eine Transport- und eine Netzwerkschicht hat, und wobei das Computersystem folgendes enthält:
Mittel, die auf einen Remote Procedure Call (RPC) von einem Klient-Prozeß reagieren, um zu erkennen, ob sich ein vom RPC identifizierter Server-Prozeß im Host befindet; und
Mittel, die auf die Erkennungsmittel reagieren und eine Interprozeß-Kommunikationseinrichtung des Hosts benutzen, um den RPC zu vereinfachen.

13. Ein Computersystem vor, um die Kommunikation zwischen einem Klient-Prozeß und einem Server-Prozeß in einer verteilten Computerumgebung zu verwalten, wobei der in einem Host (15) gespeicherte Klient-Prozeß mit einem physischen Netzwerk (14) verbunden ist, das eine Transport- und eine Netzwerkschicht hat, und das System folgendes enthält:
(a) Mittel, die auf einen Remote Procedure Call vom Klient-Prozeß reagieren, um zu erkennen, ob sich ein vom Remote Procedure Call identifizierter Server-Prozeß im Host befindet;
(b) Mittel, die auf den Server-Prozeß reagieren, der sich im Host befindet, um einen Interprozeß-Kommunikationspfad zwischen dem Klient-Prozeß und dem Server-Prozeß ohne die Transport- und Netzwerkschichten des physischen Netzwerks zu erstellen; und
(c) Mittel, um den Remote Procedure Call auszuführen.

## Revendications

1. Procédé de gestion d'une communication entre un processus client et un processus serveur dans un environnement informatique réparti, le processus client résidant sur un ordinateur hôte (15) qui est connecté à un réseau physique (14) comportant une couche de transport et une couche de réseau, comprenant les étapes consistant à :
(a) lorsqu'un appel de procédure à distance est fait par le processus client, détecter si un processus serveur identifié par l'appel de procédure à distance est situé sur l'ordinateur hôte,
(b) si le processus serveur est situé sur l'ordinateur hôte, établir une voie de communication interprocessus entre le processus client et le p.rocessus serveur sans utiliser les couches de transport et de réseau du réseau physique, et
(c) exécuter l'appel de procédure à distance.

2. Procédé selon la revendication 1, dans lequel la voie de communication interprocessus est établie par le processus client transmettant au processus serveur un identificateur de liaison comprenant un point d'extrémité.

3. Procédé selon la revendication 2, dans lequel le point d'extrémité comprend un nom de chemin d'accès complet vers un fichier de point de connexion.

4. Procédé selon la revendication 3, dans lequel le fichier de point de connexion est un objet identificateur polyvalent unique.

5. Procédé selon l'une quelconque des revendications précédentes, dans lequel l'appel de procédure à distance est exécuté en utilisant un utilitaire de messagerie d'émission et de réception d'un système d'exploitation de l'ordinateur hôte.

6. Procédé selon l'une quelconque des revendications précédentes, dans lequel le processus client renvoie un vecteur des structures de données dont au moins une comprend une séquence de protocole afin d'établir la voie de communication interprocessus entre le processus client et processus serveur.

7. Procédé selon la revendication 6, dans lequel chacune des structures de données dans le vecteur comprend une séquence de protocole destinée à établir une voie de communication interprocessus entre le processus client et le processus serveur sans utiliser les couches de transport et de réseau.

8. Procédé selon la revendication 6, dans lequel le vecteur des structures de données comprend un ensemble de structures de données, dont chacune établit une voie de communication interprocessus entre le processus client et le processus serveur sans utiliser les couches de transport et de réseau, et au moins une structure de données comportant une séquence de protocole qui établit une voie de communication entre le processus client et le processus serveur grâce à l'utilisation des couches de transport et de réseau.

9. Procédé selon la revendication 8, comprenant en outre les étapes consistant à :
forcer le processus client à utiliser les séquences de protocoles provenant de l'ensemble des structures de données avant d'utiliser la séquence de protocole qui établit la voie de communication grâce à l'utilisation des couches de transport et de réseau.

10. Procédé selon la revendication 1, dans lequel ladite étape d'établissement comprend le renvoi au processus client d'un vecteur d'identificateurs de liaison comprenant un premier ensemble et un second ensemble, chacun du premier ensemble des identificateurs de liaison comprenant une séquence de protocole afin d'établir une voie de communication interprocessus entre le processus client et le processus serveur sans utiliser les couches de transport et de réseau, chaque identificateur du second ensemble d'identificateurs de liaison comprenant une liaison de protocole afin d'établir une voie de communication entre le processus client et le processus serveur grâce à l'utilisation des couches de transport et de réseau, le procédé comprenant en outre les étapes consistant à :
tenter d'exécuter l'appel de procédure à distance en utilisant l'un des identificateurs de liaison du premier ensemble jusqu'à ce que tous les identificateurs de liaison du premier ensemble aient été utilisés, et
si tous les identificateurs de liaison du premier ensemble ont été utilisés et qu'une voie de communication interprocessus n'a pas été établie, utiliser l'un des identificateurs de liaison du second ensemble pour tenter d'exécuter l'appel de procédure à distance.

11. Procédé selon l'une quelconque des revendications précédentes, dans lequel l'ordinateur hôte accepte un système d'exploitation fondé sur UNIX, et dans lequel ladite étape d'établissement comprenant le renvoi au processus client d'un identificateur de liaison comportant une séquence de protocole "ncacn_unix_stream" afin d'établir la voie de communication interprocessus entre le processus client et le processus serveur, où dans la séquence de protocole, "ncacn" est un protocole RPC (appel de procédure à distancé) orienté connexion, "unix" identifie un domaine de communication d'une famille d'adresses AF_UNIX de réseau UNIX et "stream" identifie un point de connexion dans le domaine UNIX.

12. Système informatique réalisant un environnement informatique réparti dans lequel des utilisateurs peuvent accéder à des ressources et à des applications de processus réparties, le système informatique comprenant un ordinateur hôte (15) connecté à un réseau local (14) comportant une couche de transport et une couche de réseau, comprenant :
un moyen répondant à un appel de procédure à distance (RPC) provenant d'un processus client afin de détecter si un processus serveur identifié par l'appel RPC est situé sur l'ordinateur hôte, et
un moyen répondant au moyen de détection afin d'utiliser un mécanisme de communication interprocessus de l'ordinateur hôte pour faciliter l'appel RPC.

13. Système informatique destiné à gérer une communication entre un processus client et un processus serveur dans un environnement informatique réparti, le processus client résidant sur un ordinateur hôte (15) qui est connecté à un réseau physique (14) comportant une couche de transport et une couche de réseau, ledit système comprenant :
(a) un moyen répondant à un appel de procédure à distance qui est effectué par le processus client, afin de détecter si un processus serveur identifié par l'appel de procédure à distance est situé sur l'ordinateur hôte,
(b) un moyen répondant au processus serveur qui est situé sur l'ordinateur hôte, afin d'établir une voie de communication interprocessus entre le processus client et le processus serveur sans utiliser les couches de transport et de réseau du réseau physique, et
(c) un moyen destiné à exécuter l'appel de procédure à distance.
